# EUROPEAN PATENT APPLICATION

(11) **EP 4 332 437 A1**
(43) Date of publication of application: **06.03.2024**
(21) Application number: 21939282.6
(22) Date of filing: 28.04.2021
(51) Int. Cl.: F23K 5/00

(54) **HYDROGEN SUPPLY SYSTEM**

(71) Applicant: Hitachi, Ltd., Tokyo 100-8280 (JP)
(72) Inventor: FUJITA Shinji, Tokyo 100-8280 (JP); IIZUKA Hidehiro, Tokyo 100-8280 (JP); KANI Yuuko, Tokyo 100-8280 (JP); MIZUKAMI Takaaki, Tokyo 100-8280 (JP); SASAKI Takashi, Tokyo 100-8280 (JP); ISHIDA Naoyuki, Tokyo 100-8280 (JP); INAGAKI Ryohei, Tokyo 100-8280 (JP); WATANABE Ayumi, Tokyo 100-8280 (JP)
(74) Representative: Mewburn Ellis LLP
(86) International application number: PCT/JP2021/017024
(87) International publication number: WO 2022/230121

(57) **Abstract**

To prevent explosion of hydrogen gas in a hydrogen gas separation means even in a case where gas leakage occurs in a hydrogen gas supply system. A hydrogen supply system includes a hydrogen gas separation means (3) for separating hydrogen gas from mixed gas containing the hydrogen gas and city gas, the hydrogen gas separation means (3) is stored in a housing (14), an opening (15) for taking in outside air is provided in at least one or more locations of the housing (14), an exhaust port (16) is provided in at least one or more locations of the housing, and a hydrogen combustion catalyst (10) for combining hydrogen and oxygen into water is provided in the housing.

## Description

### Technical Field

The present invention relates to a hydrogen supply system that supplies hydrogen to a consumer using mixed gas of hydrogen gas and city gas, and particularly relates to a gas leakage countermeasure mechanism in the hydrogen supply system.

### Background Art

In recent years, hydrogen energy has attracted attention as clean alternative energy from the viewpoints of environmental problems such as global warming due to emission of greenhouse gases including carbon dioxide and energy problems such as depletion of petroleum resources. However, a supply infrastructure facility as typical infrastructure gas for hydrogen gas is not yet developed, and a technique for safely and stably supplying hydrogen gas is important.

As disclosed in PTL 1 as a hydrogen gas supply infrastructure facility, a method of supplying hydrogen gas via an existing city gas conduit network has been proposed. In this hydrogen gas supply method, hydrogen gas is mixed with city gas at a supply end of the city gas, and the mixed gas is supplied to the existing city gas conduit network. Then, the city gas and the hydrogen gas are separated on the consumer side, a necessary gas species is extracted, and then unnecessary gas is returned to the city gas conduit network. As a hydrogen separation method on the consumer side, a method using a hydrogen separation membrane constituted with palladium, an alloy thereof, or a polymer membrane, and a method using a hydrogen electrode of a fuel cell are disclosed. PTL 2 proposes a hydrogen supply system that supplies city gas mixed with hydrogen using an existing city gas conduit network, the supply system including a mechanism that performs adjustment so that a calorific value, combustibility, and the like, of the city gas hardly change even after hydrogen is taken out.

### Citation List

### Patent Literature

PTL 1: JP 2002-213695 A
PTL 2: JP 2006-169357 A
PTL 3: JP 2017-094293 A

### Summary of Invention

### Technical Problem

In the techniques described in PTL 1 and PTL 2, an overall configuration of a hydrogen gas supply system is disclosed in which mixed gas of hydrogen and city gas is supplied to an existing city gas conduit network, the hydrogen gas and the city gas are separated at hydrogen gas separation means provided on the consumer side, a gas species required by the consumer is supplied, and unnecessary gas species are returned to the gas conduit. PTL 1 and PTL 2 focus on stable supply means for hydrogen gas and city gas in a case where the hydrogen gas is mixed into the existing city gas conduit network, and problems related to combustion conditions of the city gas, and solve the problems. In order to stably and safely supply hydrogen gas to consumers, while it is essential to construct safety measures at the time of gas leakage, PTL 1 and PTL 2 do not clearly describe this technical problem. When the hydrogen gas is separated on the consumer side, if the hydrogen gas leaks and its concentration becomes equal to or higher than an explosion limit concentration (4.0%), the hydrogen gas reacts violently with oxygen in the air, which may cause an explosion. In a case where a hydrogen explosion occurs in the vicinity of the consumer due to hydrogen leakage, there is a risk of causing serious damage to surrounding facilities and human bodies. Thus, an explosion prevention system at the time of hydrogen gas leakage is required.

PTL 3 discloses an explosion prevention system at the time of hydrogen leakage in equipment using hydrogen gas. In PTL 3, in an electric unit that controls a gas purification device or a gas recovery device, in order not to ignite hydrogen in the electric unit in a case where hydrogen gas leaks, a method is adopted in which pressure adjustment means including an inlet port and an exhaust port for air or inert gas is provided in a housing of the electric unit so that a hydrogen concentration in the electric unit is equal to or lower than an explosion limit concentration.

However, when hydrogen gas leaks, monitoring the hydrogen concentration in the housing so that the hydrogen concentration is always lower than the explosion limit concentration, and controlling an inflow amount of air and inert gas so that the hydrogen concentration falls below the explosion limit concentration by adjusting the pressure by the pressure adjustment means when the hydrogen concentration exceeds the explosion limit concentration are considered to be cumbersome and not to function when a power supply is lost due to a disaster such as an earthquake. In order to construct a safe hydrogen supply infrastructure, it is desirable to construct a system so that the concentration of leaked hydrogen gas can be reduced to equal to or lower than the explosion limit concentration autonomously and even in a situation at the time of occurrence of a disaster such as an earthquake.

It is therefore an object of the present invention to prevent explosion of hydrogen gas in hydrogen gas separation means even in a case where gas leakage occurs in a hydrogen supply system in which mixed gas of hydrogen and city gas is supplied to an existing city gas conduit network and hydrogen or city gas is separated on a consumer's side to use the gas.

### Solution to Problem

In order to solve the above problems, a hydrogen supply system of the present invention is a hydrogen supply system including hydrogen gas separation means for separating hydrogen gas from mixed gas containing the hydrogen gas and city gas, the hydrogen gas separation means is stored in a housing, an opening for taking in outside air is provided in at least one or more locations of the housing, an exhaust port is provided in at least one or more locations of the housing, and a hydrogen combustion catalyst for combining hydrogen and oxygen into water is provided in the housing.

Other means will be described in description of embodiments.

### Advantageous Effects of Invention

According to the hydrogen supply system of the present invention, in a hydrogen gas supply system in which mixed gas of hydrogen and city gas is supplied to an existing city gas conduit network and hydrogen or city gas is separated on the consumer side to use the gas, even in a case where gas leakage occurs, explosion of the hydrogen gas in the hydrogen gas separation means can be prevented.

### Brief Description of Drawings

[FIG. 1] FIG. 1 is a schematic configuration of a supply system of mixed gas of hydrogen gas and city gas.
[FIG. 2] FIG. 2 is a schematic configuration diagram of hydrogen gas separation means described in a first embodiment.
[FIG. 3] FIG. 3 is a view illustrating outline of a hydrogen gas explosion prevention process when hydrogen gas leaks in the hydrogen gas separation means.
[FIG. 4] FIG. 4 is a view illustrating a configuration in which an exhaust unit is provided in hydrogen gas separation means in a hydrogen supply system described in a second embodiment in order to assist exhaust in a housing.
[FIG. 5] FIG. 5 is a view illustrating a configuration in which a hydrogen combustion catalyst is disposed in an upper portion of a housing in hydrogen gas separation means in a hydrogen supply system described in a third embodiment.
[FIG. 6] FIG. 6 is a view illustrating a mixed gas shut-off system for shutting off supply of mixed gas on the basis of a result of a calorific value in a hydrogen combustion catalyst in a hydrogen supply method in a hydrogen supply system described in a fourth embodiment.
[FIG. 7] FIG. 7 is a view illustrating a configuration in which an odorant concentration adjustment device is provided in a hydrogen supply method in a hydrogen supply system according to a fifth embodiment.

### Description of Embodiments

Hereinafter, embodiments of the present invention will be described in detail with reference to the drawings.

### <<First embodiments

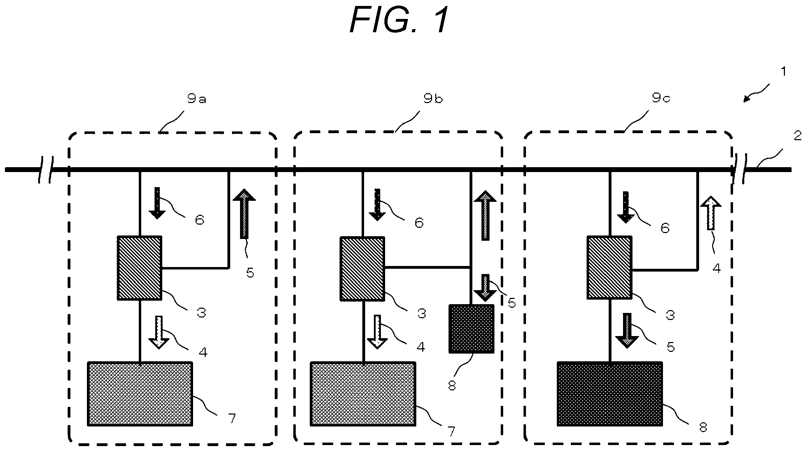

A first embodiment of a hydrogen supply system 1 in the present invention will be described with reference to FIGS. 1 to 3.

FIG. 1 is a schematic configuration around a consumer of a mixed gas supply system of hydrogen gas and city gas according to the present embodiment. An actual mixed gas supply system includes manufacturing and supply facilities such as a city gas manufacturing plant, a hydrogen gas manufacturing plant, a mixing facility of city gas and hydrogen gas, a booster, an odorization device, a gas holder, a governor, and a gas meter. However, these are not illustrated in FIG. 1 because they are complicated. Here, methane is a typical component of the city gas, but this may be butane, propane, or the like, or mixed gas thereof. Hereinafter, this mixed gas supply system is referred to as the hydrogen supply system 1.

Depending on a type of gas to be used, consumers are roughly classified into three types: a consumer 9a of hydrogen gas 4, a consumer 9b of hydrogen gas 4 and city gas 5, and a consumer 9c of city gas 5. A configuration of the supply facility at the consumer differs depending on the type of gas to be used, and thus, the configuration of each supply facility will be described.

At the consumer 9a of the hydrogen gas 4, the mixed gas 6 is lead from a gas conduit 2 to which the mixed gas 6 is supplied, the hydrogen gas 4 and the city gas 5 are separated by hydrogen gas separation means 3, and the hydrogen gas 4 is used by hydrogen utilization equipment 7. The city gas 5 is unnecessary at the consumer 9a, and thus, the city gas 5 is returned to the gas conduit 2.

At the consumer 9b of the hydrogen gas 4 and the city gas 5, similarly to the consumer 9a of the hydrogen gas 4, the hydrogen gas separation means 3 separates the mixed gas 6 into the hydrogen gas 4 and the city gas 5, and then the hydrogen gas 4 is used by the hydrogen utilization equipment 7. Further, the consumer 9b uses part of the city gas 5 in city gas utilization equipment 8 and returns unnecessary gas to the gas conduit 2.

At the consumer 9c of the city gas 5, the mixed gas 6 is introduced from the gas conduit 2, the hydrogen gas 4 and the city gas 5 are separated by the hydrogen gas separation means 3, and then the city gas 5 is used by the city gas utilization equipment 8. At the consumer 9c, the hydrogen gas 4 is unnecessary, and thus, the hydrogen gas 4 is returned to the gas conduit 2.

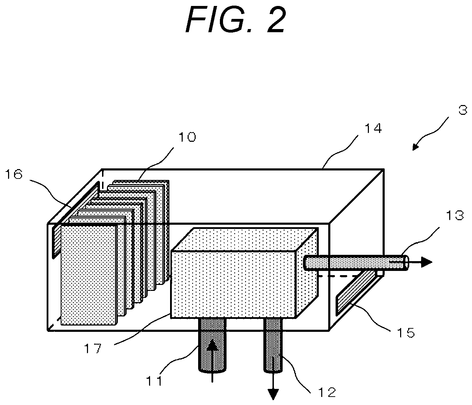

An essential configuration in the hydrogen supply system 1 illustrated in FIG. 1 is the hydrogen gas separation means 3 for separating the mixed gas 6 into the hydrogen gas 4 and the city gas 5. A schematic configuration of the hydrogen gas separation means 3 is illustrated in FIG. 2. Here, it is assumed that the consumer 9a illustrated in FIG. 1 uses hydrogen gas.

As illustrated in FIG. 2, the hydrogen gas separation means 3 includes a hydrogen gas separation device 17 for separating hydrogen gas and city gas from mixed gas, a housing 14 for storing the hydrogen gas separation device 17, and a hydrogen combustion catalyst 10. Examples of a material of the hydrogen combustion catalyst 10 can include platinum, palladium, and the like. A mixed gas conduit 11 is connected to the hydrogen gas separation device 17, and mixed gas of hydrogen gas and city gas is introduced into the hydrogen gas separation device 17. The introduced mixed gas is separated into the hydrogen gas 4 and the city gas 5 by a hydrogen separation membrane (not illustrated) provided in the hydrogen gas separation device 17. As the hydrogen separation membrane, palladium, a palladium alloy, a polymer membrane, or a ceramic or carbon-based hydrogen separation membrane may be applied. Of the separated hydrogen gas 4 and city gas 5, the hydrogen gas 4 required by the consumer 9a is supplied to the consumer 9a through a consumer conduit 13. The consumer 9a returns the unnecessary city gas 5 to the gas conduit (not illustrated) via a return conduit 12. If a pressure is insufficient when the city gas is returned to the gas conduit (not illustrated), it is also conceivable to increase the gas pressure with a booster (not illustrated), or the like.

The housing 14 that stores the hydrogen gas separation device 17 is desirably made of a metal because the housing is used as an explosion-proof structure at the time of gas leakage while protecting the hydrogen gas separation device 17 and desirably has a structure or a material that does not damage the housing 14 at the time of explosion of the hydrogen gas 4. The housing 14 is provided with an outside air intake port 15 for taking in outside air and an exhaust port 16 for exhausting gas inside the housing 14. The outside air intake port 15 is an opening through which outside air is taken in. The housing 14 is provided with at least one or more outside air intake ports 15 and at least one or more exhaust ports 16.

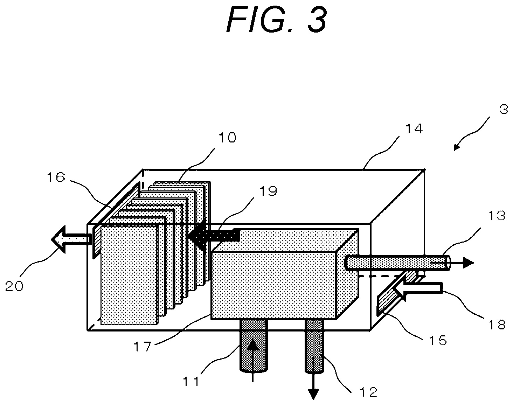

Next, an explosion prevention process by hydrogen gas in the hydrogen gas separation means 3 at the time of hydrogen gas leakage will be described with reference to FIG. 3. In a case where hydrogen gas or mixed gas containing hydrogen gas leaks from the hydrogen gas separation device 17, a hydrogen concentration inside the housing 14 needs to be made equal to or lower than an explosion limit concentration (4.0%) of hydrogen. Thus, as illustrated in FIG. 3, the outside air 18 is taken in from the outside air intake port 15 provided in the housing 14 and introduced into the hydrogen combustion catalyst 10 together with the leaked hydrogen gas 19 in the housing 14. Hydrogen is burned in the hydrogen combustion catalyst 10, and exhaust gas 20 having a reduced hydrogen concentration is discharged to the outside air from the exhaust port 16 provided in the housing 14. A direction of an arrow in the drawing indicates a direction in which the gas flows. Hydrogen is lighter than air, and thus, the exhaust port 16 provided in the housing 14 is preferably provided in an upper portion of the housing 14 and at a location higher than the center in a height direction of the hydrogen gas separation means 3. As a result, the hydrogen concentration inside the housing 14 can be lowered.

In addition, a temperature of the hydrogen combustion catalyst 10 rises due to hydrogen combustion in the hydrogen combustion catalyst 10 and upward airflow occurs around the hydrogen combustion catalyst 10, and thus, efficient exhaust can be performed by providing the exhaust port 16 in the upper portion of the housing 14. The hydrogen combustion catalyst 10 is desirably provided at a position higher than the center in the height direction of the hydrogen gas separation means 3. This results in making it possible to lower the hydrogen concentration by burning hydrogen in the housing 14.

A case will be considered where the hydrogen gas leaks in the hydrogen supply system 1 in which the mixed gas of the hydrogen gas and the city gas is supplied to the existing city gas conduit network, and the hydrogen gas or the city gas is separated by the hydrogen gas separation means 3 on the consumer side to use the gas in this manner. Also in this case, it is possible to prevent explosion of the hydrogen gas in the hydrogen gas separation means 3 by actively burning the hydrogen gas in the housing 14 in which the hydrogen gas separation device 17 is stored using the hydrogen combustion catalyst 10 to lower the hydrogen gas concentration.

### <<Second embodiments

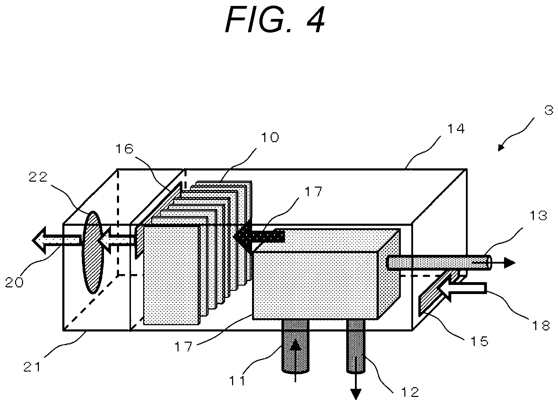

A second embodiment of the hydrogen supply system 1 in the present invention will be described with reference to FIG. 4. Note that the present embodiment is a modification of the first embodiment, and the same or similar parts as those of the first embodiment are denoted by the same reference numerals, and detailed description thereof will be omitted.

FIG. 4 illustrates a schematic configuration of the hydrogen gas separation means 3 in the second embodiment. Here, it is assumed that the consumer 9a illustrated in FIG. 1 uses hydrogen gas.

As illustrated in FIG. 4, the hydrogen gas separation means 3 includes the hydrogen gas separation device 17 for separating the hydrogen gas and the city gas from the mixed gas, the housing 14 for storing the hydrogen gas separation device 17, and the hydrogen combustion catalyst 10. Examples of a material of the hydrogen combustion catalyst 10 can include platinum, palladium, and the like. A mixed gas conduit 11 is connected to the hydrogen gas separation device 17, and mixed gas of hydrogen gas and city gas is introduced into the hydrogen gas separation device 17. The introduced mixed gas is separated into the hydrogen gas 4 and the city gas 5 by a hydrogen separation membrane (not illustrated) provided in the hydrogen gas separation device 17. As the hydrogen separation membrane, palladium, a palladium alloy, a polymer membrane, or a ceramic or carbon-based hydrogen separation membrane may be applied. Of the separated hydrogen gas 4 and city gas 5, the hydrogen gas 4 required by the consumer 9a is supplied to the consumer 9a through the consumer conduit 13, and unnecessary city gas 5 is returned to the gas conduit (not illustrated) through the return conduit 12. If the pressure is insufficient when the city gas 5 is returned to the gas conduit (not illustrated), it is also conceivable to increase the gas pressure with a booster (not illustrated), or the like.

The housing 14 that stores the hydrogen gas separation device 17 is desirably made of a metal because the housing is used as an explosion-proof structure at the time of gas leakage while protecting the hydrogen gas separation device 17 and is desirably configured or made of a material that does not damage the housing 14 at the time of explosion of the hydrogen gas 4. The housing 14 is provided with an outside air intake port 15 for taking in outside air and an exhaust port 16 for exhausting gas inside the housing 14. An exhaust unit 21 is provided adjacent to the exhaust port 16 provided in the housing 14. The exhaust unit 21 is provided with an exhaust fan 22 for actively discarding the gas in the housing 14 to the outside. In other words, the exhaust fan 22 that assists exhaust is provided in the exhaust port 16 provided at at least one or more locations of the housing 14.

If the leaked hydrogen gas 19 is generated from the hydrogen gas separation device 17, the outside air 18 is taken in from the outside air intake port 15 provided in the housing 14 and introduced into the hydrogen combustion catalyst 10 together with the leaked hydrogen gas 19. In the hydrogen combustion catalyst 10, hydrogen combustion reaction occurs, and the exhaust gas 20 having a reduced hydrogen concentration is discharged to the outside of the housing 14 from the exhaust port 16 provided in the housing 14. Arrows in the drawing indicate directions in which the respective gases flow. In order to efficiently introduce the leaked hydrogen gas 19 in the housing 14 into the hydrogen combustion catalyst 10, the exhaust fan 22 of the exhaust unit 21 is operated when the leaked hydrogen gas 19 is generated. For detection of the leaked hydrogen gas 19, a method of using a hydrogen concentration meter (not illustrated) provided in the housing 14, a method of monitoring a calorific value in the hydrogen combustion catalyst 10, and the like, are considered.

In addition, the hydrogen combustion reaction occurs in the hydrogen combustion catalyst 10 is exothermic reaction, and thus, it is conceivable that a temperature of the hydrogen combustion catalyst 10 becomes high, and it is also conceivable to operate the exhaust fan 22 of the exhaust unit 21 for cooling the hydrogen combustion catalyst 10 from a temperature measurement result of the hydrogen combustion catalyst 10. In other words, a control mechanism detects leakage of the hydrogen gas or the mixed gas on the basis of the temperature change obtained by a temperature sensor provided in the hydrogen combustion catalyst 10 and shuts off a supply source of the mixed gas.

Even if an external power supply is lost and the exhaust fan 22 is not operated in the event of a disaster such as an earthquake, air flow from the outside air intake port 15 toward the exhaust port 16 occurs by the heat generation in the hydrogen combustion catalyst 10, and thus, the outside air 18 taken into the housing 14 is mixed with the leaked hydrogen gas 19 and exhausted via the hydrogen combustion catalyst 10 and the exhaust port 16. Thus, even in a case where the external power supply is lost, a concentration of the leaked hydrogen gas 19 in the housing 14 can be made equal to or lower than the explosion limit concentration.

A case will be considered where the hydrogen gas leaks in the hydrogen supply system 1 in which the mixed gas of the hydrogen gas and the city gas is supplied to the existing city gas conduit network, and the hydrogen gas or the city gas is separated by the hydrogen gas separation means 3 on the consumer side to use the gas. Even in this case, it is possible to prevent explosion of the hydrogen gas in the hydrogen gas separation means 3 by actively burning the hydrogen gas in the housing 14 in which the hydrogen gas separation device 17 is stored using the hydrogen combustion catalyst 10 to lower the hydrogen gas concentration to equal to or lower than the explosion limit concentration.

### <<Third embodiments

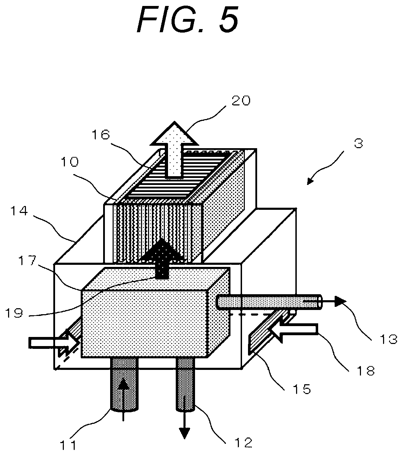

A third embodiment of the hydrogen supply system 1 in the present invention will be described with reference to FIG. 5. Note that the present embodiment is a modification of the first embodiment, and the same or similar parts as those of the first embodiment are denoted by the same reference numerals, and detailed description thereof will be omitted.

A schematic configuration of the hydrogen gas separation means 3 is illustrated in FIG. 5. Here, it is assumed that the consumer 9a illustrated in FIG. 1 uses hydrogen gas. As illustrated in FIG. 5, the hydrogen gas separation means 3 includes the hydrogen gas separation device 17 for separating the hydrogen gas and the city gas from the mixed gas, the housing 14 for storing the hydrogen gas separation device 17, and the hydrogen combustion catalyst 10. Examples of a material of the hydrogen combustion catalyst 10 can include platinum, palladium, and the like. A mixed gas conduit 11 is connected to the hydrogen gas separation device 17, and mixed gas of hydrogen gas and city gas is introduced into the hydrogen gas separation device 17. The introduced mixed gas is separated into the hydrogen gas and the city gas by a hydrogen separation membrane (not illustrated) provided in the hydrogen gas separation device 17. As the hydrogen separation membrane, palladium, a palladium alloy, a polymer membrane, or a ceramic or carbon-based hydrogen separation membrane may be applied. Of the separated hydrogen gas and city gas, the hydrogen gas required by the consumer 9a is supplied to the consumer 9a through the consumer conduit 13, and unnecessary city gas is returned to the gas conduit (not illustrated) through the return conduit 12. The housing 14 that stores the hydrogen gas separation device 17 is desirably made of a metal because the housing is used as an explosion-proof structure at the time of gas leakage while protecting the hydrogen gas separation device 17. The housing 14 is provided with an outside air intake port 15 for taking in outside air and an exhaust port 16 for exhausting gas inside the housing 14.

If the leaked hydrogen gas 19 is generated from the hydrogen gas separation device 17, or the like, hydrogen is lighter than air, and thus, rises toward the upper portion of the housing 14. It is therefore desirable that the hydrogen combustion catalyst 10 disposed for the purpose of lowering the hydrogen gas concentration due to the leaked hydrogen gas 19 is provided at a position higher than the hydrogen gas separation device 17 and in the upper portion of the housing 14.

In the hydrogen combustion catalyst 10, reaction in which hydrogen is burned to produce water occurs, but this reaction is exothermic reaction, and thus, a temperature around the hydrogen combustion catalyst 10 rises. As a result, airflow in the housing 14 is formed from the hydrogen gas separation device 17 toward the exhaust port 16, and the leaked hydrogen gas 19 around the hydrogen gas separation device 17 is efficiently guided to the hydrogen combustion catalyst 10 and burned, so that the hydrogen gas concentration in the housing 14 can be lowered to equal to or lower than the explosion limit concentration.

As described above, in the hydrogen supply system 1 in which the mixed gas of the hydrogen gas and the city gas is supplied to the existing city gas conduit network, and the hydrogen gas or the city gas is separated on the consumer's side to use the gas, even in a case where the hydrogen gas leaks, it is possible to prevent explosion of the hydrogen gas in the hydrogen gas separation means 3 by actively burning the hydrogen gas in the housing 14 in which the hydrogen gas separation device 17 is stored using the hydrogen combustion catalyst 10 to lower the hydrogen gas concentration.

### <<Fourth embodiments

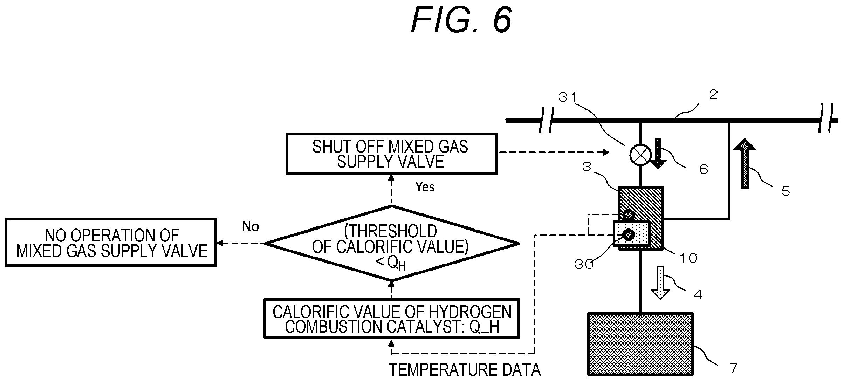

A fourth embodiment of the hydrogen supply system 1 in the present invention will be described with reference to FIGS. 5 and 6. Note that the present embodiment is a modification of the first to third embodiments, and the same or similar parts as those of the first to third embodiments are denoted by the same reference numerals, and detailed description thereof will be omitted.

A schematic configuration of the hydrogen supply system 1 including the hydrogen gas separation means 3 in the fourth embodiment is similar to that illustrated in FIG. 5. Here, it is assumed that the consumer 9a in FIG. 1 uses the hydrogen gas 4. The hydrogen gas separation means 3 includes the hydrogen gas separation device 17 for separating the hydrogen gas 4 and the city gas 5 from the mixed gas 6, the housing 14 for storing the hydrogen gas separation device 17, and the hydrogen combustion catalyst 10.

Examples of a material of the hydrogen combustion catalyst 10 can include platinum, palladium, and the like. The mixed gas conduit 11 is connected to the hydrogen gas separation device 17, and the mixed gas 6 of the hydrogen gas 4 and the city gas 5 is introduced into the hydrogen gas separation device 17. A shut-off valve 31 illustrated in FIG. 6 to be described later is provided from the gas conduit 2 to the hydrogen gas separation means 3.

The shut-off valve 31 illustrated in FIG. 6 may be installed alone or provided together with a gas meter (not illustrated). The shut-off valve 31 also operates as a safety device that forcibly shuts off supply of the mixed gas 6 when an earthquake occurs or when gas leakage occurs on the consumer 9a side. The mixed gas 6 introduced into the hydrogen gas separation means 3 is separated into the hydrogen gas 4 and the city gas 5 by a hydrogen separation membrane (not illustrated) provided in the hydrogen gas separation device 17. As the hydrogen separation membrane, palladium, a palladium alloy, a polymer membrane, or a ceramic or carbon-based hydrogen separation membrane may be applied.

Of the separated hydrogen gas 4 and city gas 5, the hydrogen gas 4 required by the consumer 9a is supplied to the consumer 9a through the consumer conduit 13. The city gas 5 unnecessary for the consumer 9a is returned to the gas conduit 2 via the return conduit 12. The housing 14 that stores the hydrogen gas separation device 17 is desirably made of a metal because the housing is used as an explosion-proof structure at the time of gas leakage while protecting the hydrogen gas separation device 17. In addition, a temperature sensor 30 is provided at and around the hydrogen combustion catalyst 10 so as to be able to monitor a temperature change at and around the hydrogen combustion catalyst 10.

Next, an explosion prevention process using the leaked hydrogen gas in the hydrogen gas separation means 3 at the time of leakage of the hydrogen gas will be described with reference to FIG. 6. In a case where the hydrogen gas 4 or the mixed gas 6 containing the hydrogen gas 4 leaks in the hydrogen gas separation means 3, the concentration of the hydrogen gas 4 in the hydrogen gas separation means 3 is prevented from becoming equal to or higher than the explosion limit concentration by burning the leaked hydrogen gas in the hydrogen combustion catalyst 10 as described in the first to third embodiments. In addition, in the present embodiment, a calorific value in the hydrogen combustion catalyst 10 is calculated from the temperature data obtained by the hydrogen combustion catalyst and the temperature sensor 30 provided around the hydrogen combustion catalyst 10. A system configuration is employed where whether or not the hydrogen gas 4 leaks is determined on the basis of the calculated calorific value, and when the hydrogen gas 4 leaks, the shut-off valve 31 provided between the gas conduit 2 and the hydrogen gas separation means 3 is shut off to prevent new inflow of the mixed gas 6 into the hydrogen gas separation means 3 and to prevent spread of damage at the time of gas leakage. In the hydrogen combustion catalyst 10, heat generation of 284 kJ/mol occurs in accordance with combustion of the hydrogen gas 4. A concentration (for example, 2.0%) at which the hydrogen gas 4 is below the explosion limit concentration (4.0%) is set as a threshold concentration, and a calorific value generated when the hydrogen gas 4 having the threshold concentration is burned with the hydrogen combustion catalyst 10 is calculated in advance from a volume of the housing 14 used in the hydrogen gas separation means 3. The calorific value in the hydrogen combustion catalyst 10 can be calculated by comparing the temperature data obtained by the temperature sensor 30 provided in the hydrogen combustion catalyst 10 with the temperature around the hydrogen combustion catalyst 10. When the calorific value is measured, in order to improve calculation accuracy, it is also conceivable to provide the hydrogen gas separation means 3 with sensors (not illustrated) that measure an amount of intake of outside air and the flow rate around the hydrogen combustion catalyst 10. In a case where the calorific value measured here exceeds a preset threshold of the calorific value, it is determined that the hydrogen gas 4 or the mixed gas 6 containing the hydrogen gas 4 has leaked, and the shut-off valve 31 is shut off. This results in making it possible to construct a system that prevents the mixed gas 6 from newly flowing into the hydrogen gas separation means 3 and prevents spread of damage at the time of gas leakage. The shut-off valve 31 may be provided with a control mechanism that shuts off in a case where vibration of equal to or greater than a certain level is applied in an earthquake, or the like. In an emergency, supply of the mixed gas 6 is shut off, and even in a case where the hydrogen gas 4 leaks in the hydrogen gas separation means 3, the hydrogen gas concentration can be lowered to equal to or lower than the explosion limit concentration by combustion of the hydrogen gas 4 in the hydrogen combustion catalyst 10, so that explosion to be caused by leakage of the hydrogen gas 4 can be prevented.

As described above, in the hydrogen supply system 1 in which the mixed gas of the hydrogen gas and the city gas is supplied to the existing city gas conduit network, and the hydrogen gas or the city gas is separated on the consumer's side to use the gas, even in a case where the hydrogen gas leaks, it is possible to prevent explosion of the hydrogen gas in the hydrogen gas separation means by actively burning the hydrogen gas in the housing in which the hydrogen gas separation device is stored using the hydrogen combustion catalyst to lower the hydrogen gas concentration. In addition, it is possible to provide the safe hydrogen supply system 1 that detects hydrogen leakage at the time of leakage of the hydrogen gas or the mixed gas containing the hydrogen gas by monitoring the calorific value of the hydrogen combustion catalyst and prevents new inflow of the mixed gas into the hydrogen gas separation means, thereby preventing spread of damage at the time of gas leakage.

### <<Fifth embodiments

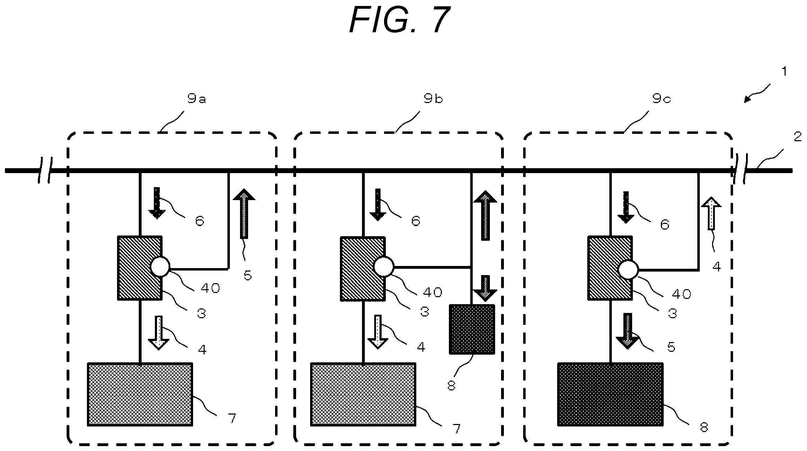

A fifth embodiment of the hydrogen supply system 1 in the present invention will be described with reference to FIG. 7. Note that the present embodiment is a modification of the first to fourth embodiments, and the same or similar parts as those of the first to fourth embodiments are denoted by the same reference numerals, and detailed description thereof will be omitted.

FIG. 7 illustrates a schematic configuration around a consumer of the hydrogen supply system 1. Depending on a type of gas to be used, consumers are roughly classified into three types: a consumer 9a of hydrogen gas, a consumer 9b of hydrogen gas and city gas, and a consumer 9c of city gas. Although a configuration of the supply facility in the consumer differs depending on a type of gas to be used, the present embodiment will be described by taking the consumer 9a who uses the hydrogen gas 4 as an example.

At the consumer 9a of the hydrogen gas 4, the mixed gas 6 is lead from a gas conduit 2 to which the mixed gas 6 is supplied, the hydrogen gas 4 and the city gas 5 are separated by hydrogen gas separation means 3, and the hydrogen gas 4 is used by hydrogen utilization equipment 7. The hydrogen gas separation means 3 includes the hydrogen gas separation device 17 for separating the hydrogen gas 4 and the city gas 5 from the mixed gas 6, the housing 14 for storing the hydrogen gas separation device 17, and the hydrogen combustion catalyst 10. Examples of a material of the hydrogen combustion catalyst 10 can include platinum, palladium, and the like. The mixed gas conduit is connected to the hydrogen gas separation device 17, and the mixed gas 6 of the hydrogen gas 4 and the city gas 5 is introduced into the hydrogen gas separation device 17. An odorant is added to the mixed gas 6 in order to detect whether or not gas leaks. A concentration of the odorant to be added should be such that odor can be confirmed at a gas mixing volume ratio of 1/2000 in the air, and for example, about 30 to 50 mg/Nm³ is added. In the consumer 9a of the hydrogen gas 4 described in the present embodiment, the city gas 5 is unnecessary, and thus is returned to the gas conduit 2. In this event, the hydrogen gas 4 is separated from the mixed gas 6 and used, and thus, the odorant concentration in the city gas 5 returned to the gas conduit 2 is higher than that in the mixed gas 6. In a gas conduit network having many consumers 9a of the hydrogen gas 4, there is a possibility that the concentration of the odorant may be higher than a specified value.

Thus, in the present embodiment, the hydrogen gas separation means 3 is provided with an odorant concentration adjustment mechanism 40. Then, according to an amount of the taken out hydrogen gas 4, part of the odorant contained in the city gas 5 is removed, and the city gas 5 is returned to the gas conduit 2 after the concentration of the odorant is adjusted to be within the specified value. This makes it possible to keep the concentration of the odorant within the specified value even after the hydrogen gas 4 is taken out. In addition, even in a case where the city gas 5 or the mixed gas 6 leaks, the gas leakage can be detected in the hydrogen gas separation means 3 provided in each customer. It is also conceivable to adopt a configuration in which leakage of an odorant is sensed in the housing 14 of the hydrogen gas separation means 3 and supply of the mixed gas 6 from the gas conduit 2 to the hydrogen gas separation means 3 is shut off. In the consumer 9c of the city gas 5, in order to return the hydrogen gas 4 to the gas conduit 2, the concentration of the odorant in the hydrogen gas 4 to be returned is adjusted to be within the specified value by the odorant concentration adjustment mechanism 40 provided in the hydrogen gas separation means 3.

As described above, in the hydrogen supply system 1 in which the mixed gas of the hydrogen gas and the city gas is supplied to the existing city gas conduit network, and the hydrogen gas or the city gas is separated on the consumer's side to use the gas, even in a case where the hydrogen gas leaks, it is possible to prevent explosion of the hydrogen gas in the hydrogen gas separation means 3 by actively burning the hydrogen gas in the housing 14 in which the hydrogen gas separation device 17 is stored using the hydrogen combustion catalyst 10 to lower the hydrogen gas concentration. In addition, it is possible to provide the hydrogen supply system 1 that implements safe hydrogen gas supply by detecting leakage of the city gas and the mixed gas by odor and adjusting the concentration of the odorant when unnecessary gas is returned to the gas conduit.

### (Modifications)

The present invention is not limited to the above-described embodiments and includes various modifications. For example, the above-described embodiments have been described in detail for easy understanding of the present invention, and the present invention is not necessarily limited to those having all the described components. In addition, part of the components of a certain embodiment can be replaced with the components of another embodiment, and the components of another embodiment can be added to the configuration of a certain embodiment. In addition, it is also possible to add, delete, or replace other components for part of the components of each embodiment.

Some or all of the above-described configurations, functions, processing units, processing means, and the like, may be implemented by hardware such as an integrated circuit, for example. Each of the above-described configurations, functions, and the like, may be implemented by software by a processor interpreting and executing a program for implementing each function. Information such as a program, a table, and a file for implementing each function can be stored in a recording device such as a memory, a hard disk, and a solid state drive (SSD), or a recording medium such as a flash memory card and a digital versatile disk (DVD).

In addition, in each embodiment, control lines and information lines considered to be necessary for description are illustrated, and not all control lines and information lines in a product are necessarily illustrated. In practice, it may be considered that almost all the components are connected to each other.

### Reference Signs List

- 1: hydrogen supply system
- 2: gas conduit
- 3: hydrogen gas separation means
- 4: hydrogen gas
- 5: city gas
- 6: mixed gas
- 7: hydrogen utilization equipment
- 8: city gas utilization equipment
- 9a: consumer (hydrogen gas)
- 9b: consumer (hydrogen gas and city gas)
- 9c: consumer (city gas)
- 10: hydrogen combustion catalyst
- 11: mixed gas conduit
- 12: return conduit
- 13: consumer conduit
- 14: housing
- 15: outside air intake port (opening)
- 16: exhaust port
- 17: hydrogen gas separation device
- 18: outside air
- 19: leaked hydrogen gas
- 20: exhaust
- 21: exhaust unit
- 22: exhaust fan
- 30: temperature sensor
- 31: shut-off valve
- 40: odorant concentration adjustment mechanism

## Claims

1. A hydrogen supply system comprising hydrogen gas separation means for separating hydrogen gas from mixed gas containing the hydrogen gas and city gas,
the hydrogen gas separation means being stored in a housing,
an opening for taking in outside air being provided in at least one or more locations of the housing,
an exhaust port being provided in at least one or more locations of the housing, and
a hydrogen combustion catalyst for combining hydrogen and oxygen into water being provided in the housing.

2. The hydrogen supply system according to claim 1, wherein
the exhaust port provided in at least one or more locations of the housing is provided at a position higher than a center in a height direction of the hydrogen gas separation means.

3. The hydrogen supply system according to claim 1 or 2, wherein
the hydrogen combustion catalyst is provided at a position higher than the center in the height direction of the hydrogen gas separation means.

4. The hydrogen supply system according to any one of claims 1 to 3, wherein
a fan which assists exhaust is provided in the exhaust port provided in at least one or more locations of the housing.

5. The hydrogen supply system according to any one of claims 1 to 4, wherein
the hydrogen combustion catalyst is provided with a temperature sensor, and
the hydrogen supply system comprises a control mechanism which detects leakage of the hydrogen gas or the mixed gas on a basis of a temperature change obtained by the temperature sensor and shuts off a supply source of the mixed gas.

6. The hydrogen supply system according to any one of claims 1 to 5, wherein the hydrogen gas separation means includes an adjustment mechanism for a concentration of an odorant.
